# FASCICULE DE BREVET EUROPEEN

(11) **EP 1 882 603 B1**
(45) Date de publication et mention de la délivrance du brevet: **22.12.2010**
(21) Numéro de dépôt: 07112450.7
(22) Date de dépôt: 13.07.2007
(51) Int. Cl.: B60H 1/24

(54) **Module de mixage et/ou de répartition d'air pour l'aération de zones spécifiques d'un habitacle de véhicule**
Modul zum Mischen und/oder Verteilen von Luft zur Belüftung von bestimmten Zonen eines Fahrerhauses eines Fahrzeugs
Air mixing and/or distribution module for ventilating specific areas of a vehicle passenger compartment

(30) Priorité: 24.07.2006 FR 0606732
(43) Date de publication de la demande: 30.01.2008
(73) Titulaire: Valeo Systèmes Thermiques, 78321 Le Mesnil Saint Denis Cedex (FR)
(72) Inventeur: Wittmann, Klaus VALEO SYSTEMES THERMIQUES, 78321 Le Mesnil St Denis (FR); Almori, Armelle, 78310 Maurepas (FR); Gesell, Bodo, 64850 Schaafeim (DE); Queinnec, Jean-Yves, 78990 Elancourt (FR); Gartner, Stefan, 96476 Bad Rodach (DE)

(56) Documents cités:
- EP-A- 1 059 180
- DE-A1- 10 261 036
- DE-C1- 10 002 951
- DE-C1- 19 711 379
- FR-A1- 2 531 913
- FR-A1- 2 778 152
- FR-A1- 2 804 377
- FR-A1- 2 862 911
- US-A1- 4 665 971
- US-A1- 5 902 181

## Description

### Domaine technique de l'invention.

L'invention est du domaine des installations de chauffage, de ventilation et/ou de climatisation pour habitacle de véhicule. Elle a pour objet une installation de chauffage, de ventilation et/ou de climatisation, pour l'aération de zones spécifiques d'un habitacle de véhicule, voir US 4665971.

### Etat de la technique.

Les véhicules sont couramment équipés d'une installation principale de chauffage, de ventilation et/ou de climatisation pour l'aération de l'habitacle. Ces installations principales comprennent un dispositif de traitement thermique et de ventilation d'air, qui est implanté à l'avant de l'habitacle à proximité du poste de conduite. De telles installations comportent des conduites en communication avec le dispositif de traitement thermique et de ventilation d'air, qui débouchent vers différentes zones de l'habitacle à aérer, telles que des zones avant droite et gauche, ou encore des zones arrière droite et gauche de ventilation arrière et de ventilation de pied arrière par exemple. De telles dispositions sont par exemple décrites dans le document FR2804377 (VALEO CLIMATISATION).

Un problème posé réside dans l'organisation globale de l'installation pour permettre une aération individualisée des différentes zones de l'habitacle à aérer, notamment pour des zones distantes du dispositif de traitement thermique et de ventilation d'air telles que des zones arrière de l'habitacle. Une telle individualisation est notamment relative au choix des zones à aérer, ainsi qu'au débit et à la température du flux d'air à ventiler pour chacune de ces zones. Les contraintes d'encombrement du dispositif de traitement thermique et de ventilation d'air localisé à l'avant du véhicule, rendent difficiles l'organisation et la commande d'une telle individualisation notamment pour des zones distantes. En outre, il est souhaitable que l'organisation globale de l'installation permette son implantation aisée sur de quelconques véhicules, que ce soient des véhicules de modèles différents d'un même constructeur, que des modèles de véhicules de constructeurs différents.

Par exemple, il est connu de cloisonner le dispositif de traitement thermique et de ventilation d'air en autant de chambres de mixage et d'évacuation d'air que de zones à aérer. De telles chambres sont susceptibles d'être constituées de modules greffés sur un boîtier du dispositif, avec pour conséquence une complexité de structure et un accroissement de l'encombrement de ce dispositif, qu'il est souhaitable d'éviter. On pourra notamment se reporter au document FR2862911 (VALEO CLIMATISATION) qui décrit de telles dispositions.

Par exemple encore, il est connu d'implanter des installations secondaires de chauffage, de ventilation et/ou de climatisation au voisinage des zones à aérer. Cependant, de telles installations secondaires sont coûteuses et encombrantes.

Il a été proposé d'exploiter la présence de conduits respectivement d'air chaud et d'air froid en provenance du dispositif de traitement thermique et de ventilation d'air, pour réaliser en aval proche de ce dispositif un mixage de l'air véhiculé respectivement par ces conduits, et pour ensuite acheminer l'air mixé vers une zone spécifique de l'habitacle à aérer. Plus particulièrement selon FR2778152 (VALEO CLIMATISATION), un conduit d'air chaud débouche sur un conduit d'air froid par l'intermédiaire d'un volet d'admission sélective de l'air chaud à l'intérieur du conduit d'air froid, ce dernier acheminant ensuite l'air mixé vers une zone spécifique de l'habitacle. Une telle solution présente cependant les inconvénients d'une implantation dans l'habitacle d'un nombre important de conduits, sinon à réduire le nombre de zones individualisées à aérer. En outre, l'encombrement d'un tel dispositif au voisinage du dispositif de traitement thermique et de ventilation d'air rend cette solution peu acceptable, et les modalités de mise en oeuvre du mixage de l'air destiné aux zones spécifiques de l'habitacle ne sont pas satisfaisantes au regard du confort individuel des passagers installés notamment aux places arrière.

Il a aussi été proposé d'utiliser un conduit permettant d'acheminer simultanément de l'air à différentes températures en provenance du dispositif de traitement thermique, vers une zone de l'habitacle à aérer distante du dispositif de traitement thermique. Un tel conduit est subdivisé en conduits élémentaires en relation avec une bouche de sortie d'air respective du dispositif de traitement thermique. Par exemple selon DE10261036 (BEHR Gmbh & Co), un conduit global est composé de deux conduits élémentaires respectivement en relation avec une bouche de sortie d'air froid et une bouche de sortie d'air mixé du dispositif de traitement thermique. Ces dispositions permettent notamment de réduire l'encombrement des moyens d'acheminement de l'air à des températures respectives vers une zone de l'habitacle à aérer. Cependant, se pose le problème de l'exploitation optimisée du volume global du conduit, attendu que de l'air acheminé seulement par l'un des conduits élémentaires est susceptible d'être utilisé pour la ventilation de la zone distante.

### Objet de l'invention.

Le but de la présente invention est de proposer des moyens constitutifs d'une installation de chauffage, de ventilation et/ou de climatisation, qui permettent d'aérer individuellement différentes zones d'un habitacle de véhicule situées à distance d'un dispositif de traitement thermique que comporte l'installation. Il est plus particulièrement visé par la présente invention de proposer de tels moyens qui soient efficaces et peu coûteux, qui permettent une aération individualisée des différentes zones souhaitées, tout en étant simples à installer dans un environnement donné et notamment dans un habitacle d'un véhicule, et tout en étant d'un encombrement permettant leur implantation aisée dans cet environnement. Il est aussi visé par la présente invention de proposer de tels moyens dont l'organisation offre la possibilité de commander individuellement la ou les zones à aérer, ainsi que la température et le débit du flux d'air ventilé pour chacune de ces zones. Il est aussi visé par la présente invention de proposer de tels moyens dont l'organisation permet d'optimiser leur exploitation au regard de leur encombrement, pour une aération à une température adaptée de la ou des zones à ventiler.

L'invention a pour objet une installation de chauffage, de ventilation et/ou de climatisation pour l'aération notamment d'un habitacle de véhicule. Selon la revendication 1. Les revendications dépendantes présentent formes préférentielles de l'invention.

### Description des figures.

La présente invention sera mieux comprise à la lecture de la description qui va en être faite d'exemples de réalisation, en relation avec les figures des planches annexées, dans lesquelles :
La fig.1 est un schéma en perspective d'une installation de chauffage, de ventilation et/ou de climatisation comportant un module d'aération selon un exemple de réalisation de la présente invention.
La fig.2 est un schéma en coupe d'une première forme de réalisation d'un module d'aération de la présente invention.
La fig.3 est un schéma en coupe d'une deuxième forme de réalisation d'un module d'aération de la présente invention.
Les fig.4 à fig.7 sont des schémas illustrant respectivement diverses variantes de réalisation d'une installation comportant un module d'aération de l'invention, sans pourtant montrer un conduit avec une chambre de distribution tel que revendiqué.
Les fig.8 et fig.9 sont des illustrations schématiques d'un conduit de distribution d'air en provenance d'un dispositif de traitement thermique d'une installation de chauffage, de ventilation et/ou de climatisation selon des variantes respectives de réalisation.

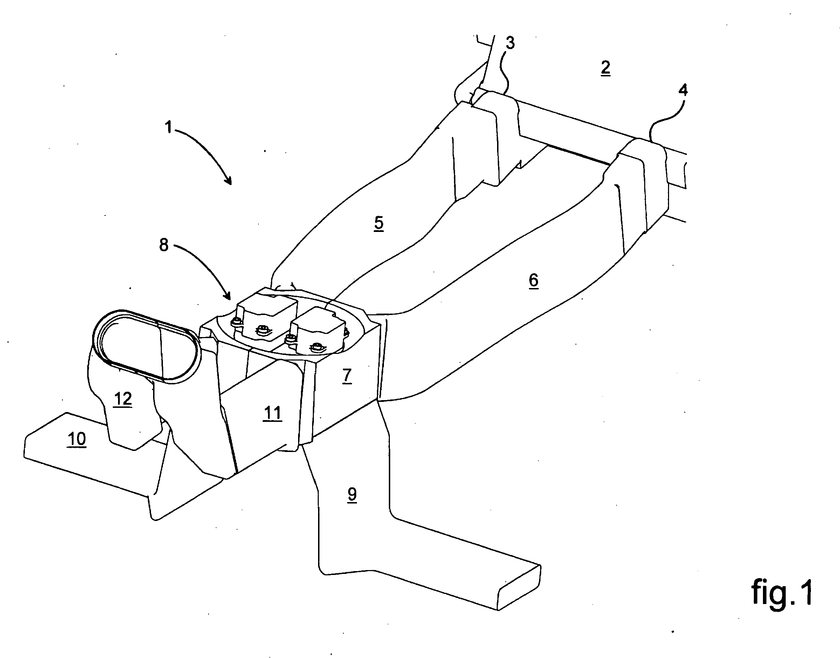

Sur la fig.1, une installation 1 de chauffage, de ventilation et/ou de climatisation d'un véhicule comprend un dispositif 2 de traitement thermique et de ventilation d'air pour aérer l'habitacle du véhicule à une température souhaitée. Un tel dispositif 2 est notamment implanté à l'avant de l'habitacle, et comporte une pluralité de bouches d'évacuation d'air pour aérer des zones spécifiques. Sur l'exemple de réalisation illustré, il est prévu d'exploiter deux de ces bouches d'évacuation 3,4 pour l'aération de la zone arrière de l'habitacle. Selon une première variante, l'une de ces bouches d'évacuation 3,4 délivre de l'air froid, tandis que l'autre bouche d'évacuation 3,4 délivre de l'air chaud. Selon une autre variante, l'une au moins de ces bouches d'évacuation 3,4 délivre de l'air préalablement mixé à l'intérieur du dispositif 2 de traitement thermique et de ventilation d'air. Ces bouches d'évacuation 3,4 peuvent être soit respectivement dédiées à une ou plusieurs quelconques zones de l'habitacle à aérer, telles que des zones avant ou arrière, soit être spécifiquement dédiées à l'aération d'une zone de l'habitacle distante du dispositif de traitement thermique, zone arrière notamment.

Par exemple, un conduit 5 d'air chaud et un conduit 6 d'air froid sont respectivement affectés à des bouches d'évacuation 3,4 d'air chaud et d'air froid du dispositif 2. Ces conduits d'air 5,6 s'étendent depuis l'avant de l'habitacle vers la zone arrière, en étant notamment disposés de part et d'autre d'une zone médiane de l'habitacle couramment utilisée pour la réception d'organes mécaniques du véhicule tels qu'une boîte à vitesses, et/ou d'organes de confort tels qu'un coffre de rangement. Ces conduits d'air 5,6 sont joints au dispositif 2 de traitement thermique et de ventilation d'air indifféremment de manière réversible, tel que par emboîtement, par clipage ou autres techniques analogues, ou de manière irréversible, tel que par collage, par soudage ou autres techniques analogues.

Les conduits d'air 5,6 sont par ailleurs en communication avec un boîtier 7 d'un module d'aération 8 spécifiquement dédié à l'aération d'une zone de l'habitacle distante de dispositif de traitement thermique 2, telle que la zone arrière du véhicule, à proximité de laquelle il est destiné à être implanté. Ce module d'aération 8 est un module de mixage entre les flux d'air froid et d'air chaud respectivement acheminés par les conduits d'air 5,6, et/ou un module de répartition de l'air admis à l'intérieur du boîtier 7 entre différentes zones arrière de l'habitacle à ventiler, telles que pour la ventilation droite, la ventilation gauche, la ventilation de pied droit et la ventilation de pied gauche.

Selon une variante particulière de réalisation, les conduits 5,6 d'air sont susceptibles d'être chacun subdivisés en conduits élémentaires acheminant de l'air à des températures respectives, dont le mixage est opéré à l'intérieur du boîtier 7.

Le boîtier 7 est notamment installé à l'arrière des sièges avant, en zone médiane de l'habitacle. Le boîtier 7 est d'une part en communication avec les conduits d'air 5,6, qui constituent des conduits d'entrée d'air dans le boîtier 7, et d'autre part avec des conduits de sortie 9, 10, 11, 12 pour l'aération de zones spécifiques de la zone arrière de l'habitacle. Plus particulièrement, le boîtier 7 est équipé de quatre conduits de sortie 9, 10, 11, 12, dont un conduit 9 pour la ventilation de pied arrière droit, un conduit 10 pour la ventilation de pied arrière gauche, un conduit 11 pour la ventilation arrière droite et un conduit 12 pour la ventilation arrière gauche. Les conduits de sortie 9, 10, 11, 12 sont aussi susceptibles d'être exploités pour alimenter en air des piliers intermédiaires d'un habitacle de véhicule.

Les conduits 9,10 de ventilation de pied arrière droit et gauche sont susceptibles de se prolonger latéralement de part et d'autre du boîtier 7 pour déboucher dans une zone arrière adaptée de l'habitacle. Les conduits 11,12 de ventilation arrière droite et gauche sont susceptibles de se prolonger depuis la zone médiane du boîtier 7, pour déboucher dans une zone médiane arrière de l'habitacle. Les débouchés de ces conduits 11,12 de ventilation arrière droite et gauche sont de préférence équipés de volets ou organes analogues permettant de diriger l'air selon le souhait du ou des passagers arrière. Les conduits d'entrée 5,6 et de sortie 9,10,11,12 sont susceptibles d'être joints au boîtier 7 indifféremment de manière réversible, tel que par emboîtement, par clipage ou autres techniques analogues, ou de manière irréversible, tel que par collage, par soudage ou autres techniques analogues.

Grâce à la présence du module d'aération 8 interposé entre le dispositif 2 de traitement thermique et de ventilation d'air, et la pluralité des conduits de sortie 9,10,11,12 respectivement affectés à l'aération d'une zone spécifique arrière de l'habitacle, le prolongement, la disposition, les dimensions et la localisation de ces conduits de sortie 9,10,11,12 sont susceptibles d'être agencés aisément selon un quelconque véhicule, sans de surcroît induire une gêne dans la zone avant de l'habitacle.

L'exemple de réalisation illustré n'est cependant pas limitatif quant au nombre de conduits de sorties susceptibles d'équiper le boîtier 7, ni quant à la ou les destinations de ces derniers à l'aération d'au moins une zone spécifique de l'habitacle.

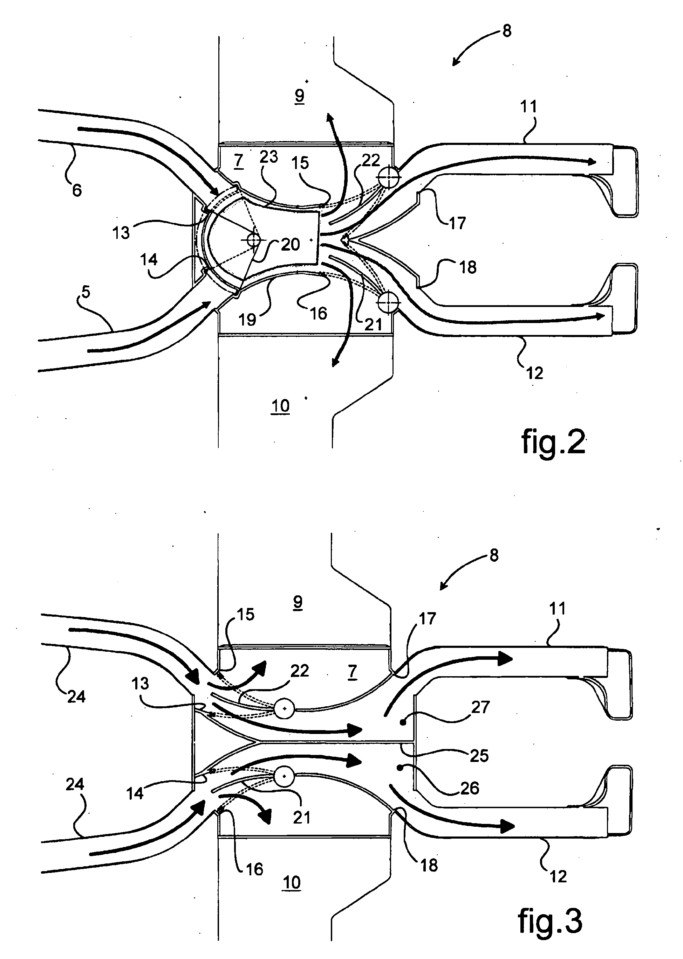

Sur la fig.2, le boîtier 7 comporte deux bouches d'entrée 13,14 et quatre bouches de sortie 15,16,17,18. L'une 13 des bouches d'entrée est en communication avec un conduit d'entrée 6 acheminant de l'air froid, tandis que l'autre bouche d'entrée 14 est en communication avec un conduit d'entrée 5 acheminant de l'air chaud.

Ces conduits d'entrée 5,6 débouchent sur une chambre de mixage 19 que comporte le boîtier 7. Un organe de répartition d'air d'entrée 20, tel qu'un volet tambour, un volet drapeau ou un volet papillon par exemple, est monté sur le boîtier 7 pour régler progressivement l'admission d'air à partir de l'un et/ou de l'autre des conduits d'entrée 5,6. Les flux d'air chaud et/ou d'air froid sont admis à l'intérieur de la chambre de mixage 19 où ils se mêlent l'un à l'autre.

Les bouches de sortie 15,16,17,18 sont réparties en couple de bouches de sortie droite 15,17 et en bouches de sortie gauche 16,18. Pour chacun de ces couples 15,17 et 16,18, une bouche de sortie 15,16 est dédiée à la ventilation de pied arrière, tandis que l'autre bouche de sortie 17,18 est dédiée à la ventilation arrière. Pour chacun de ces couples 15,17 et 16,18, un organe de répartition d'air de sortie 21,22, tel qu'un volet tambour, un volet papillon ou un volet drapeau par exemple, permet de diriger le flux d'air en provenance de la chambre de mixage 19 progressivement pour la ventilation arrière et/ou pour la ventilation de pied arrière.

Un déflecteur 23 est disposé à l'intérieur de la chambre de mixage 19 pour guider le flux d'air à travers cette dernière depuis les bouches d'entrée 13,14 vers les bouches de sortie 15,16,17,18. Ce déflecteur 23 permet de régler la température en sortie du boîtier 7 et de gérer une progressivité satisfaisante de la température d'air aux différentes bouches de sorties 15,16,17,18, notamment entre les bouches de sorties de pied 15,16 et les bouches de sortie de ventilation arrière 17,18.

Sur la fig.3, le boîtier 7 comporte deux bouches d'entrée 13,14 et quatre bouches de sortie 15,16,17,18. Les bouches d'entrée 13,14 sont chacune en communication avec un conduit d'entrée 24 acheminant de l'air mixé. Le boîtier 7 comporte une cloison interne 25 qui subdivise son volume intérieur en deux espaces internes distincts 26,27 respectivement affectés à la ventilation droite et gauche de la zone arrière de l'habitacle, ventilation arrière et ventilation de pied notamment. Chacun de ces espaces 26,27 est en communication avec un conduit d'entrée 24 respectif.

Les bouches de sortie 15,16,17,18 sont réparties en couple de bouches de sortie 15,17 et 16,18 droite et gauche, chaque couple de bouches de sorties 15,17 et 16,18 étant affecté à un espace 26,27 respectif du boîtier 7. Pour chacun de ces couples, une bouche de sortie 15,16 est dédiée à la ventilation de pied arrière, tandis que l'autre bouche de sortie 17,18 est dédiée à la ventilation arrière. Pour chacun de ces couples, un organe de sortie 21,22 de répartition d'air, tel qu'un clapet ou analogue, permet de diriger le flux d'air progressivement pour la ventilation arrière et/ou pour la ventilation de pied arrière. Ces organes de sortie 21,22 de répartition d'air sont disposés en aval proche de la bouche d'entrée correspondante 13,14, pour diriger le flux d'air soit vers un conduit de sortie 9,10 de ventilation de pied arrière, soit vers un canal interne du boîtier 7 découchant sur un conduit de sortie 11,12 de ventilation arrière.

Les première et deuxième variantes de réalisation respectivement illustrées sur les fig.2 et fig.3 sont susceptibles d'être combinées entre elles. Par exemple, les espaces internes 26 et 27 sont susceptibles de recevoir chacun au moins deux conduits d'air à des températures respectives, tel qu'un conduit d'air chaud et un conduit d'air froid. Dans ce cas, les espaces internes 26 et/ou 27 sont susceptibles d'intégrer une chambre élémentaire de mixage et des moyens élémentaires de mixage de l'air en provenance de ces deux conduits.

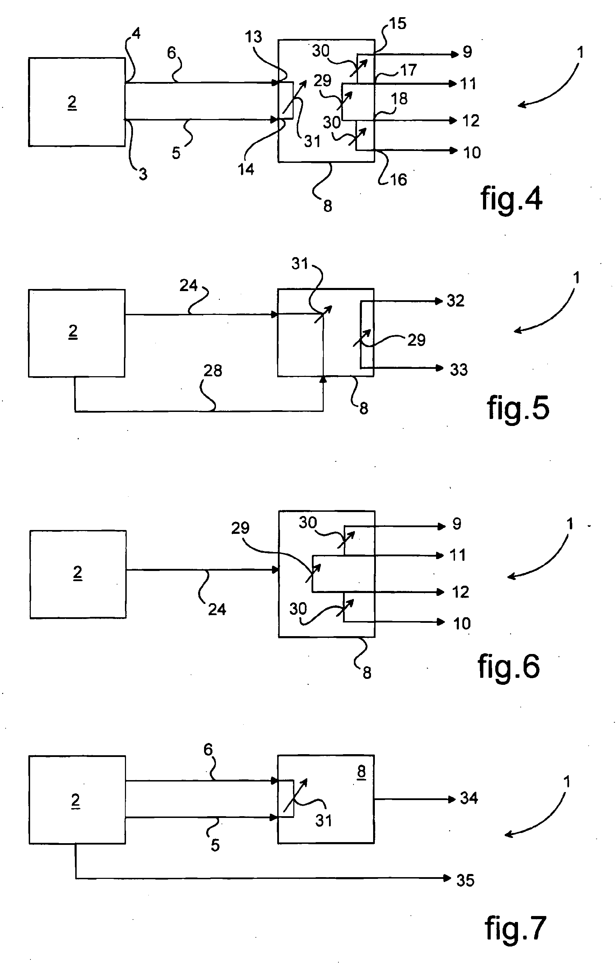

Sur les fig.4 à fig.7, une installation 1 de chauffage, de ventilation et/ou de climatisation comporte un dispositif 2 de traitement thermique et de ventilation d'air, relié à distance par l'intermédiaire d'au moins un conduit d'entrée 5,6,24,28 à un module d'aération 8 de l'invention, pour la ventilation de la zone arrière d'un habitacle d'un véhicule. Un tel module d'aération 8 est équipé de moyens de répartition d'au moins un flux d'air qu'il reçoit vers des zones spécifiques de la zone arrière de l'habitacle.

Sur les exemples de réalisation représentés sur les fig.4 et fig.5, le module d'aération 8 est relié au dispositif de traitement thermique et de ventilation d'air par l'intermédiaire d'au moins un conduit d'entrée 5,6,24,28. Le module d'aération 8 est équipé de quatre conduits de sortie, dont un conduit de sortie 9 pour la ventilation pied arrière droit, un conduit de sortie 11 pour la ventilation arrière droite, un conduit de sortie 10 pour la ventilation pied arrière gauche et un conduit de sortie 12 pour la ventilation arrière gauche. Le module d'aération 8 comporte des moyens de répartition 29 de l'air mixé entre les zones à ventiler respectivement droite et gauche. De tels moyens de répartition 29 sont susceptibles d'être réalisés à partir d'un cloisonnement du module d'aération 8, et plus particulièrement du boîtier 7 qu'il comporte tel que visé plus haut. L'air étant réparti pour la ventilation des zones arrière droite et gauche, le module d'aération comporte des moyens de répartition de sortie 30 affectés à chacune de ces zones droite et gauche à ventiler, pour effectuer une nouvelle répartition entre la ventilation de pied arrière et la ventilation arrière.

Sur la fig.4 plus particulièrement, le module d'aération 8 est relié au dispositif 2 de traitement thermique et de ventilation d'air par l'intermédiaire de deux conduits d'entrée 5,6, qui acheminent respectivement de l'air chaud et de l'air froid. Le module d'aération 8 comporte des moyens de répartition d'entrée 31 pour effectuer un mixage entre les deux flux d'air chaud et froid.

Sur la fig.5, le module d'aération 8 est relié au dispositif 2 de traitement thermique et de ventilation d'air par l'intermédiaire d'un conduit d'entrée 24 acheminant de l'air qui est préalablement mixé, notamment à l'intérieur du dispositif 2 de traitement thermique et de ventilation d'air. Par ailleurs, le module d'aération 8 est encore relié au dispositif de traitement thermique et de ventilation d'air par l'intermédiaire d'un conduit d'entrée secondaire 28 qui achemine indifféremment de l'air chaud ou de l'air froid, selon les besoins ponctuels des passagers. De façon préférentielle, le dispositif de traitement thermique 2 comporte des moyens de sélection d'évacuation d'air à une température respective à travers l'un quelconque au moins des conduits d'entrée 24,28, voire à travers un conduit élémentaire de ces conduits d'entrée, pour alimenter en air le boîtier 7 à une température souhaitée. Par exemple, le dispositif de traitement thermique 2 comporte un organe de répartition d'air, tel qu'un volet ou analogue, pour l'ouverture et/ou la fermeture progressive ou en tout ou rien d'un conduit d'air chaud et/ou d'un conduit d'air froid et/ou d'un conduit d'air mixé alimentant le module d'aération 8.

Le module d'aération 8 est équipé de moyens de répartition d'entrée 31 permettant d'effectuer un mixage entre le flux d'air mixé et le flux d'air chaud ou froid admis. Le module d'aération 8 comporte deux bouches de sortie en relation avec deux conduits de sortie 32,33 respectivement affectés à la ventilation arrière et à la ventilation de pied arrière. Le module d'aération 8 est équipé de moyens de sortie 29 de répartition de l'air admis à l'intérieur du module d'aération 8, pour diriger le flux d'air soit vers le conduit 32 de ventilation arrière, soit vers le conduit 33 de ventilation de pied arrière.

Sur la fig.5 plus particulièrement, le module d'aération 8 est relié au dispositif de traitement thermique et de ventilation d'air par l'intermédiaire d'un conduit d'entrée 24 unique acheminant de l'air qui est préalablement mixé, notamment à l'intérieur du dispositif 2 de traitement thermique et de ventilation d'air.

Sur la fig.7, le module d'aération 8 est relié au dispositif 2 de traitement thermique et de ventilation d'air par l'intermédiaire de deux conduits d'entrée 5,6, qui acheminent respectivement de l'air chaud et de l'air froid. Le module d'aération 8 comporte des moyens de répartition d'entrée 31 pour effectuer un mixage entre les deux flux d'air chaud et froid. Le module d'aération 8 comporte une bouche de sortie unique en communication avec un conduit de sortie 34, pour indifféremment soit la ventilation arrière soit la ventilation de pied arrière. Un conduit annexe 35 est en relation avec une bouche de sortie du dispositif 2 de traitement thermique et de ventilation d'air pour inversement la ventilation de pied arrière et/ou la ventilation arrière.

Les exemples de réalisation respectivement illustrés sur les fig.4 à fig.7 sont susceptibles d'être combinés entre eux pour former un module de la présente invention offrant les divers avantages offerts par ces exemples de réalisation.

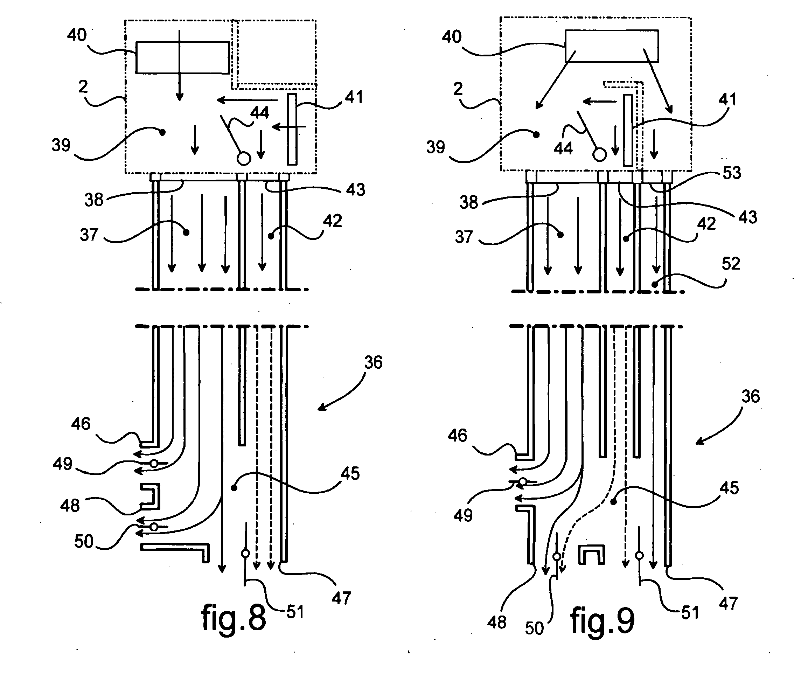

Sur les fig.8 et fig.9, un conduit de distribution d'air 36 est destiné à équiper une installation de ventilation, de chauffage et/ou de climatisation. Ce conduit 36 est notamment destiné à former un conduit d'entrée d'air à l'intérieur d'un module d'aération 8 de la présente invention, en acheminant de l'air depuis le dispositif de traitement thermique 2 de l'installation vers des zones de l'habitacle distantes de ce dernier. Ces zones sont notamment des zones de ventilation de pied arrière, de ventilation arrière, voire aussi de pilier latéral structurel de l'habitacle. Un tel conduit 36 est susceptible d'être utilisé pour l'alimentation en air d'un module d'aération spécifique, et notamment mais pas exclusivement un module d'aération 8 de la présente invention, mais est aussi susceptible d'être utilisé isolément pour acheminer de l'air vers des zones à aérer de l'habitacle qui sont distantes du dispositif de traitement thermique 2.

Ce conduit 36 est subdivisé en conduits élémentaires acheminant de l'air à des températures respectives et différentes depuis le dispositif de traitement thermique 2. Un premier conduit élémentaire 37 est en relation à son extrémité proximale avec une bouche d'évacuation d'air mixé 38 que comporte le dispositif de traitement thermique 2, notamment en sortie d'une chambre de mixage 39 disposée en aval d'un radiateur 40 et d'un évaporateur 41. Un deuxième conduit élémentaire 42 est en relation à son extrémité proximale avec une bouche d'évacuation d'air froid 43 du dispositif de traitement thermique 2, notamment disposée en aval proche de l'évaporateur 41 et en amont d'un organe de répartition 44 de l'air en provenance de l'évaporateur 41 vers la chambre de mixage 39, de sorte que le deuxième conduit élémentaire 42 est en permanence en relation avec le cas échéant de l'air en provenance de l'évaporateur 41.

Le premier conduit élémentaire 37 et le deuxième conduit élémentaire 42 sont disposés côte à côte au moins dans la zone distale du conduit 36, et débouchent conjointement dans une chambre de distribution 45. Cette chambre de distribution 45 comporte des bouches d'évacuation d'air hors du conduit 36. Sur les exemples de réalisation illustrés, une première bouche d'évacuation 46 est dédiée à la ventilation de pied arrière, une deuxième bouche d'évacuation 47 est dédiée à la ventilation arrière et une troisième bouche d'évacuation 48 est dédiée à un pilier latéral structurel de l'habitacle du véhicule.

L'agencement de la chambre de distribution 45 est telle que les bouches d'évacuation 46,47,48 sont affectées à la circulation à leur travers de l'air prioritairement en provenance d'au moins l'un des conduits élémentaires 37,42. Plus particulièrement dans le cas où le conduit 36 achemine de l'air froid et de l'air mixé par l'intermédiaire du conduit élémentaire 37,42 correspondant, il est exploité le phénomène naturel de stratification de l'air à des températures respectives à l'intérieur de la chambre de distribution 45 pour évacuer ces couches d'air à températures respectives à travers une bouche d'évacuation 46,47,48 dédiée.

Selon une variante de réalisation non illustrée, une telle évacuation sélective de l'air en provenance des conduits élémentaires 37,42 vers des zones à aérer dédiées est susceptible d'être isolément ou en complément obtenu par l'utilisation d'au moins un déflecteur ou organe analogue disposé à l'intérieur de la chambre de distribution 45.

Accessoirement, les bouches d'évacuation 46,47,48 sont munies d'organes d'obturation respectifs 49,50,51, tel que clapet ou volet, permettant de régler la quantité d'air évacuée à leur travers. Ces dispositions permettent d'aérer les différentes zones de l'habitacle indépendamment les unes des autres. En outre, de tels organes d'obturation 49,50,51 sont constitutifs des moyens d'évacuation sélective de l'air admis à l'intérieur de la chambre de distribution 45 vers l'une et/ou l'autre des bouches d'évacuation 46,47,48, indépendamment de l'affectation prioritaire de l'air en provenance d'un conduit élémentaire 37,42 vers une bouche d'évacuation 46,47,48 dédiée.

Le volume global du conduit 36 est exploité au mieux pour la ventilation des zones de l'habitacle à aérer, chacun des conduits élémentaires 37,42 débouchant dans la chambre de distribution 45 qui occupe au moins la totalité de la section générale du conduit 36. Dans le cas où un seul conduit élémentaire 37,42 est utilisé pour acheminer de l'air à une température correspondante, la totalité de la section générale du conduit 36 est exploitée pour évacuer cet air vers les différentes zones à aérer. Pour un besoin d'air chaud et/ou d'air mixé, le premier conduit élémentaire 37 est utilisé avec une perte de volume utile faible correspondante au volume du deuxième conduit élémentaire 42. L'acheminement d'air froid à travers le deuxième conduit élémentaire 42 est optimisé en raison de sa mise en relation directe en sortie de l'évaporateur 41 et en amont de l'organe de répartition 44.

A titre indicatif mais non restrictif, le deuxième conduit élémentaire 42 est d'une section largement moindre que celle du premier conduit élémentaire 37, en étant comprise entre 10% et 30% de la section globale du conduit 36.

Sur les exemples illustrés, l'air acheminé par le premier conduit élémentaire 37 est prioritairement évacué à travers la bouche de ventilation de pied arrière 46 et à travers la bouche de pilier 48.

Sur l'exemple de réalisation illustré sur la fig.8, le conduit 36 comporte seulement deux conduits élémentaires 37,42 respectivement premier et deuxième. L'air froid acheminé par le deuxième conduit élémentaire 42 est prioritairement évacué à travers la bouche de ventilation arrière 47. Une fraction de l'air mixé acheminé par le premier conduit élémentaire 37 est adjointe à l'air froid acheminé par le deuxième conduit élémentaire 42, pour être évacuée à travers la bouche de ventilation arrière 47.

Selon un premier mode de fonctionnement illustré, de l'air mixé et de l'air froid sont conjointement acheminés par le conduit 36 vers la chambre de distribution 45, respectivement à travers le premier conduit élémentaire 37 et à travers le deuxième conduit élémentaire 42. En exploitant la stratification de l'air admis à des températures différentes à l'intérieur de la chambre de distribution 45, l'air mixé est naturellement évacué hors de la chambre de distribution 45 à travers la bouche de ventilation de pied arrière 46 et la bouche de pilier 48, une fraction d'air mixé étant évacué à travers la bouche de ventilation arrière 47 ; l'air froid est évacué à travers la bouche de ventilation arrière 47. Il en ressort que l'air mixé est prioritairement utilisé pour la ventilation de pied arrière et pour la ventilation de pilier, tandis que l'air froid est prioritairement utilisé pour la ventilation arrière, en étant cependant le cas échéant mélangé à une fraction d'air mixé. Selon un autre mode de fonctionnement dans lequel il est souhaité une aération froide de l'habitacle, seul le deuxième conduit élémentaire 42 est utilisé pour acheminer de l'air froid, qui est admis à l'intérieur de la chambre de distribution 45 pour être évacué à travers la totalité des bouches d'évacuation 46,47,48. De même et selon un autre mode de fonctionnement, seul le premier conduit élémentaire 37 est utilisé pour une aération de l'habitacle avec de l'air plus ou moins chaud selon le réglage effectué dans la zone du dispositif de traitement thermique 2, l'air mixé et/ou chaud acheminé étant évacué hors de la chambre de distribution 45 à travers la totalité des bouches d'évacuation 46,47,48. Dans le cas où les bouches d'évacuation 46,47,48 sont munies d'organes d'obturation 49,50,51, l'air acheminé par l'un et/ou l'autre des conduits élémentaires 37,42 est susceptible d'être évacué à travers une quelconque au moins des bouches d'évacuation 46,47,48, à partir de l'obturation sélective de l'une au moins de ces dernières.

Sur l'exemple de réalisation illustré sur la fig.9, le conduit 36 comporte les deux conduits élémentaires 37,42 respectivement premier et deuxième, et un troisième conduit élémentaire 52 affecté à l'acheminement d'air chaud et/ou d'air mixé. Ce troisième conduit élémentaire 52 est notamment en relation à son extrémité proximale avec une bouche de sortie d'air chaud 53 du dispositif de traitement thermique 2, qui est située en aval du radiateur 40. Une fraction de l'air acheminé par le deuxième conduit élémentaire 42 est évacuée à travers la bouche de pilier 48 et à travers la bouche de ventilation arrière 47. Le cas échéant et à partir d'un réglage effectué à l'intérieur du dispositif de traitement thermique 2, de l'air chaud est acheminé par le troisième conduit élémentaire 52, pour être évacué conjointement avec l'air froid acheminé par le deuxième conduit élémentaire 42 à travers la bouche de ventilation arrière 47.

Plus particulièrement selon un premier mode de fonctionnement, de l'air mixé et de l'air froid sont acheminés vers la chambre de distribution 45 à travers respectivement le premier conduit élémentaire 37 et le deuxième conduit élémentaire 42, le troisième conduit élémentaire 52 n'étant pas utilisé. En exploitant la stratification de l'air admis à des températures différentes à l'intérieur de la chambre de distribution 45, l'air mixé est principalement évacué à travers la bouche de ventilation de pied arrière 46, une fraction de cet air étant dirigée vers la bouche de pilier 48, qui reçoit par ailleurs une fraction d'air froid en provenance du deuxième conduit élémentaire 42. Le restant d'air froid est évacué à travers la bouche de ventilation arrière 47. Selon un autre mode de fonctionnement, de l'air chaud est en outre acheminé vers la chambre de distribution 45 à travers le troisième conduit élémentaire 52, pour être adjoint à l'air froid évacué à travers la bouche de ventilation arrière 47, pour que cette zone soit finalement aérée avec de l'air mixé. Les dispositions relatives à l'exploitation des organes d'obturation 49,50,51 et aux modes de fonctionnement relatifs à l'acheminement de l'air à partir d'un seul des conduits élémentaires 37,42,52 sont similaires à celles décrites sur la fig.8.

Les formes de réalisation du conduit 36 illustrés sur les fig.8 et fig.9 sont donnés à titre d'exemples. Le conduit 36 est susceptible de comporter un nombre de conduits élémentaires quelconque selon les besoins en zones à aérer et selon les différentes températures respectivement souhaitées de l'air évacué hors de la chambre de distribution 45 à travers une bouche d'évacuation respective, selon des modes de fonctionnement du conduit 36 prédéfinis. La chambre de répartition 45 est susceptible de comporter un nombre de bouches d'évacuation quelconque selon les besoins en zones à aérer. Chacune de ces bouches d'évacuation 46,47,48 est susceptible d'être en relation avec un module d'aération 8 à laquelle elle est affectée, de manière à organiser en arborescence la distribution sélective de flux d'air à des températures respectives en provenance du dispositif de traitement thermique 2 vers différentes zones à aérer de l'habitacle qui sont distantes de celui-ci, zone de ventilation arrière, zone de ventilation de pied arrière ou encore zone de pilier latéral notamment mais pas exclusivement.

## Revendications

1. Installation de chauffage, de ventilation et/ou de climatisation (1) comportant un dispositif (2) de traitement thermique et de ventilation d'air d'un habitacle de véhicule automobile comprenant une chambre de mixage (39), un conduit d'entrée (36) en relation avec une bouche d'évacuation (38, 43, 53) du dispositif (2) de traitement thermique et de ventilation d'air, et un module d'aération (8) comprenant un boîtier (7) comportant au moins une bouche d'entrée d'air (13,14) et au moins une bouche de sortie (15,16,17,18) de l'air admis à l'intérieur du boîtier (7), le boîtier (7) étant équipé d'au moins un organe de répartition (20,21,22) d'au moins un flux d'air admis vers au moins une bouche de sortie (15,16,17,18) affectée pour assurer une distribution sélective d'air entre différentes zones dédiée du véhicule, le conduit d'entrée (36) étant subdivisé en un premier conduit élémentaire (24, 37) en relation avec une bouche de sortie d'air mixé (38) de la chambre de mixage (39) du dispositif (2) de traitement thermique, et un deuxième conduit élémentaire (5, 6, 42, 52) en relation avec une bouche de sortie d'air froid (43) et/ou d'air chaud (53) du dispositif (2) de traitement thermique, **caractérisé en ce que** le premier conduit élémentaire (24, 37) et le deuxième conduit élémentaire (5, 6, 42, 52) débouchent dans une chambre de distribution (45) comportant une pluralité de bouches d'évacuation (46, 47, 48) d'air hors du conduit d'entrée (36), l'une au moins des bouches d'évacuation (46, 47, 48) étant en relation avec la bouche d'entrée du module d'aération (8).

2. Installation de chauffage, de ventilation et/ou de climatisation (1) selon la revendication 1, **caractérisé en ce que** ladite zone dédiée est une zone arrière du véhicule.

3. Installation de chauffage, de ventilation et/ou de climatisation (1) selon l'une quelconque des revendications précédentes, **caractérisé en ce que** la bouche d'entrée (13,14) du boîtier (7) permet l'admission d'air chaud et/ou d'air froid et/ou d'air mixé en provenance du dispositif (2).

4. Installation de chauffage, de ventilation et/ou de climatisation (1) selon l'une quelconque des revendications précédentes, **caractérisé en ce que** le boîtier (7) comporte au moins deux bouches d'entrée (13,14) d'admission d'air à des températures respectives en provenance du dispositif (2).

5. Installation de chauffage, de ventilation et/ou de climatisation (1) selon l'une quelconque des revendications précédentes, **caractérisé en ce que** l'organe de répartition est un organe d'entrée (20) de répartition de l'air admis entre une bouche d'entrée (13) affectée à l'admission d'air froid et une bouche d'entrée (14) affectée à l'admission d'air chaud.

6. Installation de chauffage, de ventilation et/ou de climatisation (1) selon l'une quelconque des revendications précédentes, **caractérisé en ce qu'**une chambre de mixage (19) est interposée entre les bouches d'entrée (13,14) et la bouche de sortie (15,16,17,18), à l'intérieur de laquelle est réalisé le mélange entre les différents flux d'air de température respective.

7. Installation de chauffage, de ventilation et/ou de climatisation (1) selon l'une quelconque des revendications précédentes, **caractérisé en ce que** l'organe de répartition est un organe de répartition de l'air de sortie (21,22) évacué entre plusieurs bouches de sortie (15, 16, 17,18).

8. Installation de chauffage, de ventilation et/ou de climatisation (1) selon la revendication 7, **caractérisé en ce que** l'organe de répartition d'air de sortie (21,22) est disposé en aval immédiat de la bouche d'entrée (13,14), pour répartir l'air entre au moins une bouche de sortie (15,16) et au moins un canal débouchant dans au moins une deuxième bouche de sortie (17,18).

9. Installation de chauffage, de ventilation et/ou de climatisation (1) selon l'une quelconque des revendications précédentes, **caractérisé en ce qu'**il comporte au moins deux organes de répartition de sortie (21,22) d'air.

10. Installation de chauffage, de ventilation et/ou de climatisation (1) selon l'une quelconque des revendications précédentes, **caractérisé en ce qu'**il est équipé de moyens de commande de la manoeuvre de l'un quelconque des organes de répartition (20,21,22).

11. Installation de chauffage, de ventilation et/ou de climatisation (1) selon l'une quelconque des revendications précédentes, **caractérisé en ce que** le boîtier (7) comporte une cloison interne (25) ménageant deux espaces internes distincts (26,27).

12. Installation de chauffage, de ventilation et/ou de climatisation (1) selon l'une quelconque des revendications précédentes, **caractérisé en ce que** le boîtier (7) loge au moins un déflecteur (23) interposé entre la bouche d'entrée (13,14) et la bouche de sortie (15,16,17,18).

13. Installation de chauffage, de ventilation et/ou de climatisation (1) selon l'une quelconque des revendications précédentes, **caractérisée en ce qu'**elle comporte au moins un pulseur additionnel interposé entre le module d'aération (8) et le dispositif (2) de traitement thermique et de ventilation d'air.

14. Installation de chauffage, de ventilation et/ou de climatisation (1) selon l'une quelconque des revendications précédentes, **caractérisée en ce que** l'installation comprend un conduit annexe (36) en relation avec une bouche d'évacuation (38,43,53) du dispositif (2) de traitement thermique et de ventilation d'air et avec au moins une bouche d'entrée (13,14) d'un module d'aération (8).

15. Installation de chauffage, de ventilation et/ou de climatisation (1) selon l'une quelconque des revendications précédentes, **caractérisée en ce que** les bouches d'évacuation (46,47,48) sont équipées d'un organe d'obturation (49,54,51) pour réguler le flux d'air les traversant.

16. Installation de chauffage, de ventilation et/ou de climatisation (1) selon la revendication 15, **caractérisée en ce que** l'organe d'obturation (49,50,51) équipant les bouches d'évacuation (46,47,48) participent des moyens d'évacuation sélective de l'air admis à l'intérieur de la chambre de distribution (45),

17. Installation de chauffage, de ventilation et/ou de climatisation (1) selon l'une quelconque des revendications précédentes, **caractérisée en ce que** le deuxième conduit élémentaire (42) est en relation avec une bouche de sortie (43) ménagée en aval d'un évaporateur (41) et en amont d'un organe de répartition (44) d'air en provenance de l'évaporateur (41) vers la chambre de mixage (39).

18. Installation de chauffage, de ventilation et/ou de climatisation (1) selon l'une quelconque des revendications précédentes, **caractérisée en ce que** le conduit d'entrée (36) comporte un troisième conduit élémentaire (52) en relation avec une bouche de sortie d'air chaud (53) et/ou une bouche de sortie d'air mixé du dispositif de traitement thermique (2).

## Claims

1. Installation for heating, ventilation and/or air conditioning (1) comprising a device (2) for the heat treatment and ventilation of air of the passenger compartment of a motor vehicle comprising a mixing chamber (39), an inlet conduit (36) in relation with a removal outlet (38, 43, 53) of the device (2) for the heat treatment and ventilation of air, and an aerating module (8) comprising a casing (7) comprising at least one air inlet (13, 14) and at least one outlet (15, 16, 17, 18) for the air taken into the casing (7), the casing (7) being provided with at least one member for the distribution (20, 21, 22) of at least one intake airflow to at least one outlet (15, 16, 17, 18) assigned to provide a selective distribution of air between different dedicated zones of the vehicle, the inlet conduit (36) being subdivided into a first basic conduit (24, 37) in relation with a mixed air outlet (38) of the mixing chamber (39) of the heat treatment device (2), and a second basic conduit (5, 6, 42, 52) in relation with a cold air (43) and/or hot air (53) outlet of the heat treatment device (2),
**characterised in that** the first basic conduit (24, 37) and the second basic conduit (5, 6, 42, 52) exit into a distribution chamber (45) comprising a plurality of removal outlets (46, 47, 48) of air outside of the inlet conduit (36), at least one of the removal outlets (46, 47, 48) being in relation with the inlet of the aerating module (8).

2. Installation for heating, ventilation and/or air conditioning (1) according to claim 1, **characterised in that** said dedicated zone is a rear zone of the vehicle.

3. Installation for heating, ventilation and/or air conditioning (1) according to any of the preceding claims, **characterised in that** the inlet (13, 14) of the casing (7) allows the intake of hot air and/or cold air and/or mixed air coming from the device (2).

4. Installation for heating, ventilation and/or air conditioning (1) according to any of the preceding claims, **characterised in that** the casing (7) comprises at least two inlets (13, 14) for the intake of air at respective temperatures coming from the device (2).

5. Installation for heating, ventilation and/or air conditioning (1) according to any of the preceding claims, **characterised in that** the member for distribution is an inlet member (20) for the distribution of air taken between an inlet (13) assigned to the intake of cold air and an inlet (14) assigned to the intake of hot air.

6. Installation for heating, ventilation and/or air conditioning (1) according to any of the preceding claims, **characterised in that** a mixing chamber (19) is interposed between the inlets (13, 14) and the outlet (15, 16, 17, 18), wherein is carried out the mixing between the different airflows of respective temperature.

7. Installation for heating, ventilation and/or air conditioning (1) according to any of the preceding claims, **characterised in that** the member for distribution is a member for the distribution of the outlet air (21, 22) removed between several outlets (15, 16, 17, 18).

8. Installation for heating, ventilation and/or air conditioning (1) according to claim 7, **characterised in that** the member for distributing outlet air (21, 22) is arranged immediately downstream of the inlet (13, 14), in order to distribute the air between at least one outlet (15, 16) and at least one duct exiting into at least one second outlet (17, 18).

9. Installation for heating, ventilation and/or air conditioning (1) according to any of the preceding claims, **characterised in that** it comprises at least two members for distributing air outlet (21, 22).

10. Installation for heating, ventilation and/or air conditioning (1) according to any of the preceding claims, **characterised in that** it is provided with means of controlling the manoeuvre of any of the members for distributing (20, 21, 22).

11. Installation for heating, ventilation and/or air conditioning (1) according to any of the preceding claims, **characterised in that** the casing (7) comprises an internal partition wall (25) arranging two separate internal spaces (26, 27).

12. Installation for heating, ventilation and/or air conditioning (1) according to any of the preceding claims, **characterised in that** the casing (7) houses at least one deflector (23) interposed between the inlet (13, 14) and the outlet (15, 16, 17, 18).

13. Installation for heating, ventilation and/or air conditioning (1) according to any of the preceding claims, **characterised in that** it comprises at least one additional blower interposed between the aerating module (8) and the device (2) for the heat treatment and ventilation of air.

14. Installation for heating, ventilation and/or air conditioning (1) according to any of the preceding claims, **characterised in that** the installation comprises an annex conduit (36) in relation with a removal outlet (38, 43, 53) of the heat treatment device (2) for the heat treatment and ventilation of air and with at least one inlet (13, 14) of an aerating module (8).

15. Installation for heating, ventilation and/or air conditioning (1) according to any of the preceding claims, **characterised in that** the removal outlets (46, 47, 48) are provided with a member for sealing (49, 50, 51) in order to adjust the airflow passing through them.

16. Installation for heating, ventilation and/or air conditioning (1) according to claim 15, **characterised in that** the member for sealing (49, 50, 51) provided on the removal outlets (46, 47, 48) participates in the means for the selective removal of the air taken into the distribution chamber (45).

17. Installation for heating, ventilation and/or air conditioning (1) according to any of the preceding claims, **characterised in that** the second basic conduit (42) is in relation with an outlet (43) arranged downstream of an evaporator (41) and upstream of a member for distributing (44) air coming from the evaporator (41) to the mixing chamber (39).

18. Installation for heating, ventilation and/or air conditioning (1) according to any of the preceding claims, **characterised in that** the inlet conduit (36) comprises a third basic conduit (52) in relation with a hot air outlet (53) and/or a mixed air outlet of the heat treatment device (2).

## Patentansprüche

1. Heizungs-, Lüftungs- und/ oder Klimaanlage (1) mit einer Vorrichtung (2) zur thermischen Behandlung und Lüftung einer Fahrgastzelle eines Automobils mit einer Mischkammer (39), einem Einströmkanal (36) in Verbindung mit einer Ausströmöffnung (38, 43, 53) der Vorrichtung (2) zur thermischen Behandlung und Lüftung, und einem Lüftungsmodul (8) mit einem Gehäuse (7) mit zumindest einer Lufteinlassöffnung (13, 14) und zumindest einer Auslassöffnung (15, 16, 17, 18) für die ins Gehäuse (7) einströmende Luft, wobei das Gehäuse (7) mit zumindest einem Verteilungsorgan (20, 21, 22) von zumindest einem eingegangenen Luftstrom in Richtung zumindest einer Auslassöffnung (15, 16, 17, 18) ausgestattet ist, die für eine selektive Luftverteilung zwischen den verschiedenen zugeordneten Zonen des Fahrzeugs sorgen soll, wobei der Einströmkanal (36) in einen ersten Elementarkanal (24, 37) in Verbindung mit einer Auslassöffnung für Mischluft (38) aus der Mischkammer (39) der Vorrichtung (2) zur thermischen Behandlung, und in einen zweiten Elementarkanal (5, 6, 42, 52) unterteilt wird, der in Verbindung mit der Auslassöffnung für Kaltluft (43) und/oder Warmluft (53) der Vorrichtung (2) zur thermischen Behandlung steht,
**dadurch gekennzeichnet, dass** der erste Elementarkanal (24, 37) und der zweite Elementarkanal (5, 6, 42, 52) in eine Verteilerkammer (45) münden, die eine Vielzahl an Ausströmöffnungen (46, 47, 48) aus dem Einströmkanal (36) enthält, wobei zumindest eine der Ausströmöffnungen (46, 47, 48) in Verbindung mit der Einlassöffnung des Lüftungsmoduls (8) steht.

2. Heizungs-, Lüftungs- und/ oder Klimaanlage (1) nach Anspruch 1, **dadurch gekennzeichnet, dass** die besagte zugeordnete Zone eine rückwärtige Zone des Fahrzeugs ist.

3. Heizungs-, Lüftungs- und/ oder Klimaanlage (1) nach irgendeinem der vorherigen Ansprüche, **dadurch gekennzeichnet, dass** die Einlassöffnung (13, 14) des Gehäuses (7) die Zuführung von warmer und/ oder kalter und/ oder gemischter Luft aus der Vorrichtung (2) ermöglicht.

4. Heizungs-, Lüftungs- und/ oder Klimaanlage (1) nach irgendeinem der vorherigen Ansprüche, **dadurch gekennzeichnet, dass** das Gehäuse (7) zumindest zwei Einlassöffnungen (13, 14) für die Zuführung von Luft mit den jeweiligen Temperaturen aus der Vorrichtung (2) enthält.

5. Heizungs-, Lüftungs- und/ oder Klimaanlage (1) nach irgendeinem der vorherigen Ansprüche, **dadurch gekennzeichnet, dass** das Verteilungsorgan ein Einlassorgan (20) zur Verteilung der Luft ist, die zwischen einer Einlassöffnung (13) für die Zuführung kalter Luft und einer Einlassöffnung (14) für die Zuführung warmer Luft einströmt.

6. Heizungs-, Lüftungs- und/ oder Klimaanlage (1) nach irgendeinem der vorherigen Ansprüche, **dadurch gekennzeichnet, dass** zwischen den Einlassöffnungen (13, 14) und der Auslassöffnung (15, 16, 17, 18) eine Mischkammer (19) angebracht ist, in deren Inneren die Mischung der verschiedenen Luftströme mit der jeweiligen Temperatur erfolgt.

7. Heizungs-, Lüftungs- und/ oder Klimaanlage (1) nach irgendeinem der vorherigen Ansprüche, **dadurch gekennzeichnet, dass** das Verteilungsorgan ein Organ zur Verteilung der austretenden Luft (21, 22) ist, die zwischen mehreren Auslassöffnungen (15, 16, 17, 18) ausströmt.

8. Heizungs-, Lüftungs- und/ oder Klimaanlage (1) nach Anspruch 7, **dadurch gekennzeichnet, dass** das Verteilungsorgan für die austretende Luft (21, 22) unmittelbar nach der Einlassöffnung (13, 14) angeordnet ist, um die Luft zumindest zwischen einer Auslassöffnung (15, 16) und zumindest einem Kanal zu verteilen, der zumindest in eine zweite Auslassöffnung (17, 18) mündet.

9. Heizungs-, Lüftungs- und/ oder Klimaanlage (1) nach irgendeinem der vorherigen Ansprüche, **dadurch gekennzeichnet, dass** sie zumindest zwei Verteilungsorgane (21, 22) für den Luftaustritt enthält.

10. Heizungs-, Lüftungs- und/ oder Klimaanlage (1) nach irgendeinem der vorherigen Ansprüche, **dadurch gekennzeichnet, dass** sie mit Steuergeräten zur Betätigung irgendeines der Verteilungsorgane (20, 21, 22) ausgestattet ist.

11. Heizungs-, Lüftungs- und/ oder Klimaanlage (1) nach irgendeinem der vorherigen Ansprüche, **dadurch gekennzeichnet, dass** das Gehäuse (7) eine Innenwand (25) enthält, die zwei voneinander getrennte Innenräume (26, 27) schafft.

12. Heizungs-, Lüftungs- und/ oder Klimaanlage (1) nach irgendeinem der vorherigen Ansprüche, **dadurch gekennzeichnet, dass** im Gehäuse (7) zumindest ein Abweiser (23) untergebracht ist, der zwischen der Einlassöffnung (13, 14) und der Auslassöffnung (15, 16, 17, 18) angeordnet ist.

13. Heizungs-, Lüftungs- und/ oder Klimaanlage (1) nach irgendeinem der vorherigen Ansprüche, **dadurch gekennzeichnet, dass** sie einen zusätzlichen Pulsierer enthält, der zwischen dem Lüftungsmodul (8) und der Vorrichtung (2) zur thermischen Behandlung und Lüftung angeordnet ist.

14. Heizungs-, Lüftungs- und/ oder Klimaanlage (1) nach irgendeinem der vorherigen Ansprüche, **dadurch gekennzeichnet, dass** die Anlage einen Nebenkanal (36) in Verbindung mit einer Ausströmöffnung (38, 43, 53) der Vorrichtung (2) zur thermischen Behandlung und Lüftung und mit zumindest einer Einlassöffnung (13, 14) eines Lüftungsmoduls (8) enthält.

15. Heizungs-, Lüftungs- und/ oder Klimaanlage (1) nach irgendeinem der vorherigen Ansprüche, **dadurch gekennzeichnet, dass** die Ausströmöffnungen (46, 47, 48) mit einem Verschlussorgan (49, 50, 51) zum Regeln des Luftstromes ausgestattet sind, der durch sie hindurch strömt.

16. Heizungs-, Lüftungs- und/ oder Klimaanlage (1) nach Anspruch 15, **dadurch gekennzeichnet, dass** sich das Verschlussorgan (49, 50, 51), mit dem die Ausströmöffnungen (46, 47, 48) ausgestattet sind, an den Geräten beteiligt, die für die selektive Ausbringung jener Luft sorgen, die ins Innere der Verteilerkammer (45) einströmt.

17. Heizungs-, Lüftungs- und/ oder Klimaanlage (1) nach irgendeinem der vorherigen Ansprüche, **dadurch gekennzeichnet, dass** der zweite Elementarkanal (42) in Verbindung mit einer Auslassöffnung (43) steht, die nach einem Verdampfer (41) und vor einem Verteilungsorgan (44) der Luft aus dem Verdampfer (41) zur Mischkammer (39) angeordnet ist.

18. Heizungs-, Lüftungs- und/ oder Klimaanlage (1) nach irgendeinem der vorherigen Ansprüche, **dadurch gekennzeichnet, dass** der Einströmkanal (36) einen dritten Elementarkanal (52) in Verbindung mit einem Warmluftauslass (53) und/ oder einer Auslassöffnung für gemischte Luft aus der Vorrichtung zur thermischen Behandlung (2) enthält.
